(19) Europäisches Patentamt
European Patent Office
Office européen des brevets

(11) **EP 1 094 660 A2**

(12) **EUROPEAN PATENT APPLICATION**

(43) Date of publication:
25.04.2001 Bulletin 2001/17

(51) Int. Cl.⁷: **H04N 1/32**

(21) Application number: **00203509.5**

(22) Date of filing: **10.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.10.1999 US 422001**

(71) Applicant: **EASTMAN KODAK COMPANY Rochester, New York 14650 (US)**

(72) Inventor:
**Wen, Xin,
c/o Eastman Kodak Company
Rochester, New York 14650-2201 (US)**

(74) Representative:
**Lewandowsky, Klaus, Dipl.-Ing. et al
Kodak Aktiengesellschaft,
Patentabteilung
70323 Stuttgart (DE)**

(54) **Embedding information in a halftoned digital image**

(57) Embedding information in an input digital image includes forming a digital message image having pixels values representing the information to be embedded; providing a digital carrier image which has a random distribution of pixel code values; and convoluting the digital message image and the digital carrier image to produce a dithering matrix which contain the information to be embedded. The input digital image is halftoned with the dithering matrix to produce a halftoned digital image having the embedded information.

FIG. 1

Printed by Xerox (UK) Business Services
2.16.7 (HRS)/3.6

**Description**

This invention relates to embedding information in a halftoned digital image.

Many printing or display devices can often print or display only a limited number of optical densities. For example, an ink jet printer may be able to print two density levels (that is binary mode, or 1 bit per pixel) at each pixel on a receiver if a single ink density is used for each color and a single ink drop is placed at each pixel at a fixed ink drop volume. The number of density levels per pixel can be increased by using two or more densities for the same color ink (for example magenta or cyan), by varying ink drop volumes, or by placing more than one ink drop per color at each pixel. These arrangements can typically increase the distinguishable density levels to 2 - 4 bits per pixel or each color, using today's commercially available ink jet printers.

The printing and display devices such as the ink jet printers as described above cannot reproduce all the levels for a gray scale digital image having, for example, 6 bits or more levels per pixel per color. The input digital images of higher bit depth is therefore required to be converted to an output image of fewer levels so that the digital image can be displayed or printed by the printing or display devices. This conversion is implemented by a halftoning algorithm that renders the illusion of the large number of gray levels of the input digital image by using a smaller number (2 or more) of levels of the output image.

Halftoning algorithms can be classified into point (that is pixelwise) and neighborhood techniques. Two major point algorithms are the various ordered dither techniques, and the blue-noise mask. These methods are disclosed in *Digital Halftoning*, by Robert Ulichney, MIT Press, Cambridge, Mass., 1988, pgs. 77-79, pg. 127, pgs. 233-238, by Ulichney, commonly-assigned US-A-4,920,501, US-A-5,111,310, commonly-assigned US-A-5,291,311, commonly-assigned US-A-5,444,551, and commonly-assigned US-A-5,586,2031. A frequently used neighborhood algorithm is the Error diffusion method, as described in the above cited *Digital Halftoning*, pgs. 239-240. Among these techniques, the blue-noise dither has the advantage of a combination of high processing speed and pleasing image quality.

In the blue-noise dither, the halftoning is achieved by thresholding the level at each pixel of the input digital image against the corresponding value in a two dimensional array of blue-noise mask. Low-frequency noise has been filtered out from the blue-noise mask so that the image artifacts related to the low-frequency noise are much reduced. The blue-noise mask can be optimized at different density levels. The pixel-wise operation allows fast image processing, especially for large images.

One much desired requirement for the usage of digital images is the detection of the unauthorized use of copyrighted or personal images. For example, the professional photographers are greatly concerned about the illegitimate use of their copyrighted images in the recent years. As the use of Internet and digital imaging devices become more popular, this concern is increasingly shared by the common consumers. One example of the methods developed for this purpose is disclosed in commonly-assigned US-A-5,822,660.

An object of the present invention is to provide apparatus and methods to efficiently halftone digital images and embed information in these images. The halftoned images can be printed or displayed. The embedded information in the printed or displayed images can be used for proofing the authentication of the image or for detecting the unauthorized use of the image.

This object is achieved by a method for embedding information in an input digital image, comprising

 a) forming a digital message image having pixels values representing the information to be embedded;

 b) providing a digital carrier image which has a random distribution of pixel code values;

 c) convoluting the digital message image and the digital carrier image to produce a dithering matrix which contain the information to be embedded; and

 d) halftoning the input digital image with the dithering matrix to produce a halftoned digital image having the embedded information.

An advantage of the present invention is that the efficiency of image halftoning and information embedding in an image is improved by co-optimizing the two operations.

Another advantage of the present invention is that the quality of image halftoning and information embedding in an image is improved.

A further advantage of the present invention is that the extraction reliability of the embedded information is improved from the halftoned image with embedded information.

 FIG. 1 shows an apparatus for embedding information and halftoning a digital images in accordance to the present invention;

 FIG. 2 shows the detailed components of the computer of FIG. 1;

 FIG. 3 is a flow diagram of the operations of the apparatus of FIG. 1 including a combined operation of information embedding and halftoning; and

 FIG. 4 shows the detailed operations of the information embedding and halftoning in FIG. 3 in accordance with the present invention.

The present invention relates to apparatus for embedding information in halftoned digital images. The halftoned digital images can be printed or displayed by a digital printer.

In the present invention, the term "quality" or "image quality" refers to the image properties that define the visual effects of an image and the fidelity of the reproduced image compared to the original image. Such image properties can include grain noise, tone scale, color saturation and fidelity, sharpness, the severity of image artifacts, and broadly, the photographic "look and feel", which are well known in the imaging field.

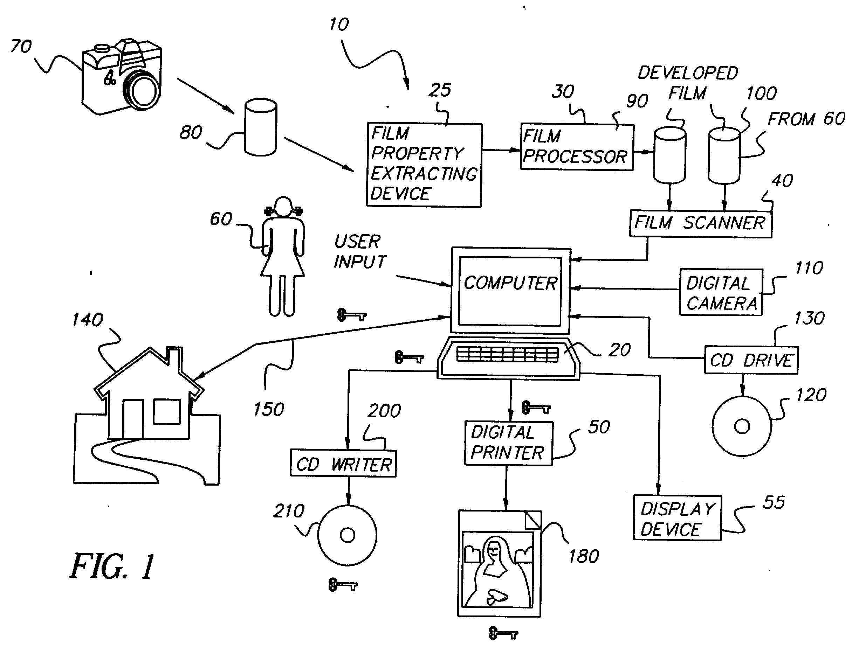

FIG. 1 shows an apparatus 10 in accordance with the present invention. The apparatus 10 includes a computer 20, a film property extraction device 25 for extracting one or more film properties as described above, a film processor 30, a film scanner 40, a digital printer 50, and a display device 55. Although not shown, the apparatus 10 can also include an optical printer for printing photographic images on a photographic paper in a wet chemical process.

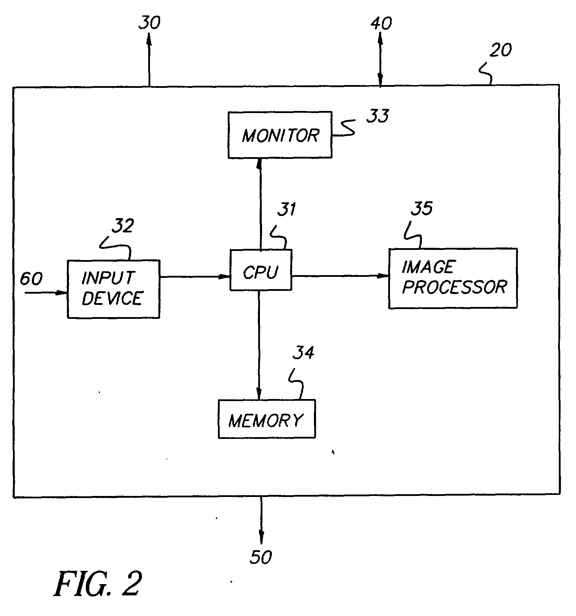

The computer 20, shown in FIG. 2, includes a Central Processing Unit (CPU) 31, input device 32, such as a keyboard, and a mouse that receives user input information from the user 60, a monitor 33 for displaying user input information or authentication images, a memory 34 for storing digital images and user input information, and a image processor 35 for processing the digital images to embed information and conducting other image processing operations well known in the art.

Referring again to FIG. 1, a camera 70 records latent images of scenes, as described above. In the present invention, the term "scene" refers to any object that can be captured as an image on a photographic film. The film carrying the latent images is typically contained in a light sealed exposed film cassette 80 that is received by the film processor 30.

As it well known in the photographic field, the film processor 30 processes the film carrying the latent images in the exposed film cassette 80 in a wet chemical process. The exposed film is sequentially processed in several processing solutions: a developer solution, a bleach solution, a fixer solution, a washing solution, or a combination of bleach/fix solution and wash/stabilizer solution. Finally, the developed film is dried in a drying box. In the present invention, the film processor 30 can also use a dry process in which the digital images can directly scanned from the films. The developed films 90 and 100 are sent to the film scanner 40 or an optical printer (not shown) for printing on a photographic paper.

The film scanner 40 scans the developed films 90 and 100 in a pixel-wise fashion. The optical densities of the analog photographic image are read at each pixel location, producing a digital image file. The digital image is a representation of its analog images on the developed film 90 and 100 and can be conveniently stored on the electronic memory 34. The digital image can also be provided by a digital camera 110, or a optical disk 120 such as Kodak's Picture CD or Kodak's Photo CD that is read by a CD drive 130. The digital image can include a single or a plurality of color planes (for example yellow, magenta, cyan, and black).

The digital images can be easily transferred and shared over the modern information channels such as the Internet. After embedded with information, as described below, the halftoned digital image is printed on a receiver by the digital printer 50 to produce a photographic image or displayed on the display device 55. The display device 55 can be embodied in numerous forms such as a CRT or an LCD display. The digital printer 50 can be an ink jet printer such as an Epson Stylus Photo 750 printer or a HP PhotoSmart printer. The digital printer 50 can also be an electrophotographic printer, a digital silver halide printer, or a thermal dye diffusion printer (also called thermal dye sublimation) such as the Kodak XLS 8600 printer. Although not shown a second scanner can also be included for digitizing images on a receiver.

The image processor 35 in the computer 20 then processes the digital images and embeds information into the digital images obtained by the film scanner 40. In the present invention, the embedded information is typically information associated with the image. In FIG. 1, different types of embedded information are represented by a "key" symbol. For example, the authentication information can be used to deter counterfeiting and illegitimate use.

The embedded information can include authentication information, the information selected by the user 60, and the sound information. The authentication information can include a watermark, copyright, and the name of the user or the photographer. In the present invention, the term "user input information" refers to the information selected or produced by the user 60 and input to the computer 20. The user input information can include the user's identification and signature, the time, location, occasion of scene, and so forth The embedded information can also include sound information such as voice and music. The sound information can be recorded at the scene of the image capture or at the Microlab or Minilab, or can also be retrieved from a memory 34.

The embedded information can be input to the computer 20 at the Microlab, Minilab or the Central Lab; it can also be produced or input from a remote location 140 such as a house through an information channel 150 such as the Internet. In FIG. 1, the "key" symbol next to the information channel 150 represents that the embedded information can be transferred in a secure fashion.

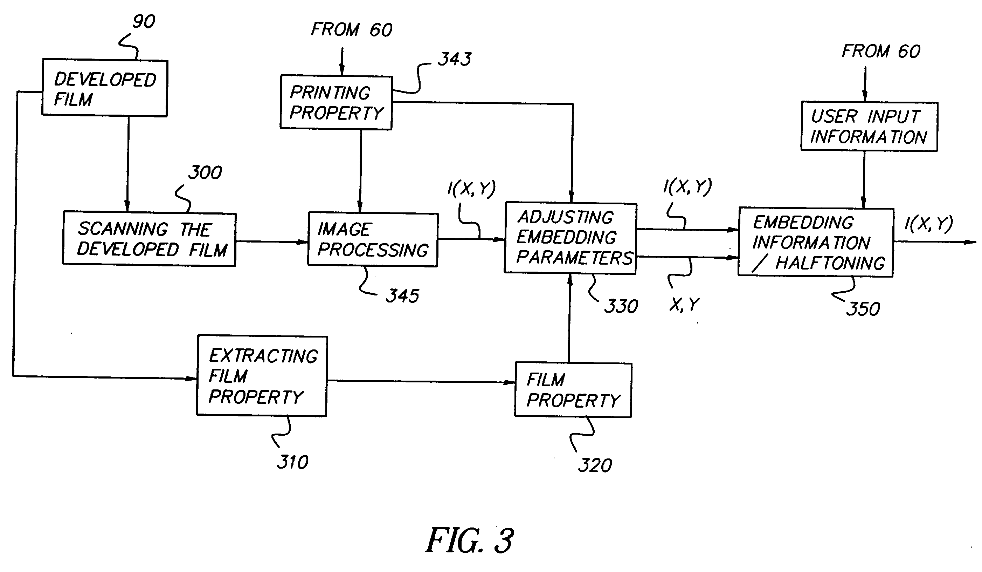

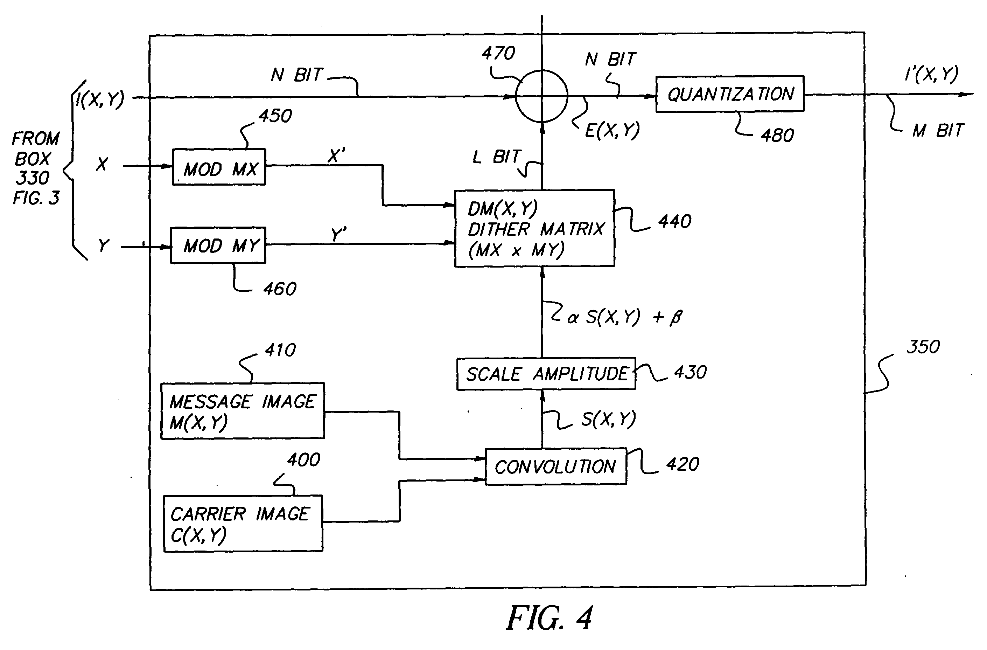

FIG. 3 illustrates the flow chart of the operations of the apparatus in accordance with the present invention. The developed film in the developed film cassette 90 is scanned in box 300 to produce a digital image. The film properties are extracted by the film property extraction device 25 in box 310, which produces film property in box 320. The film property 320 can be extracted from the magnetic coating layer on the APS film before the development of the exposed photographic film, or from the optical coding on the non-image areas of the photographic film after it is developed. The film property 320 can include one or more of the following properties film speed, film type (for example 35 mm, APS, negative or positive, and black and white), APS format (Classic, panoramic, HDTV), or exposure conditions. The extracted film properties are stored in the memory 34 in the computer 20, which is accessible by an image processor 35 for adjusting embedding parameters in box 330.

The printing property is produced in box 343. In the present invention, the term "printing property" includes one or more of the following properties: printing resolution, the number of tone levels per pixel (bit depth), the noise level of the printing method (such as visible grain noise and halftoning noise), the dimensions and the aspect ratio of the digital image. The digital image can be printed in the typical photographic formats: 3R (3.5" x 5"), 4R (4" x 6"), page size (8.5" x 11"), and APS format. For a given width (for example 3.5", 4", 5"), the image length can also vary (for example from 5" to 12") from Classic, to HDTV and Panoramic format.

The printing property can also include properties specific to each printing technologies. For example, for an ink jet printer, the printing property can include the minimum ink drop volume (or ink dot size) that can be produced by the printer, the number of different ink dots volume (or ink dot sizes) ejectable from the ink jet print head, the number of printing passes, the number of inks of different densities per color, the number of ink dots per pixel, the placement variability of ink dot placement within and between passes, and along fast and slow scan directions. The variability in the dot size for each nozzle and between nozzles can also be included.

In the present invention, the term printing property also include the properties the display device 55.

Some printing properties can also be input or selected by the user 60 as part of the user's request for the printing job. For example, the user 60 typically defines the format size (for example 4R, page size, or poster size) of printed image 180. Many of the printing properties 343 related to the digital printer 50 are stored in the memory 34 and can be automatically retrieved to be used for adjusting embedding parameters in box 330. These can include printing mode parameters such as printing resolutions, the number of colorants (YMCK, YMC, or YMM'CC'K where M' and C' represent light magenta and light cyan colors), and the number of printing passes.

The digital image is processed in box 345 in responsive to the stored printing property 343 to produce a N-bit processed digital image I(x,y). A typical value for N-bit is 6-bit to 12 bit (of tone levels at each pixel). The image processing 345 includes the scaling of the digital image to the proper image sizes and the aspect ratios as required by the format of the printed image 180 and the digital printer 50. The image processing 345 also includes tone scale calibration, color mapping, and other image processing for printing a digital image well known in the printing art.

The embedding parameters are adjusted in box 330 according to the printing property 343 and the film property 320 for preserving the high photographic image quality in the digital images, maximizing the amount of the embedded information, and the reliability of extracting the embedded information.

The user 60 produces or selects information in box 340. The information to be embedded is stored in memory 34.

In accordance with the present invention, the halftoning operation is combined with in conjunction with embedding information in box 350. The user input information is embedded to the processed digital image N-bit I(x,y) in the halftoning operation. Typically, I(x,y) is a gray scale image containing a plurality of tone levels at each pixel, for example, M-bit is 6-bit or more per pixel. The information embedding uses the adjusted embedding parameters in box 330. A halftoned digital image I'(x,y) that carries the embedded information. The halftoned digital image I'(x,y) has a bit depth of M-bit, wherein M is smaller than N (the bit depth for the processed digital image I(x,y)). M can be equal to 1 (two levels) or greater than 1 (multiple levels). An advantage of the combined halftoning and information embedding is that efficiency of the image processing is maximized.

The computer 20 sends signals to the digital printer 50 or the display device 55 according to the M-bit halftoned digital image I'(x,y). The signals are used to control the amount of colorant to be transferred at each pixel on a receiver to produce a printed image 180, or form a soft image on the display device 55.

In the present invention, the term "halftoning" refers to the image processing algorithm or operation that renders the illusion of the large number of gray levels of the input digital image by using a smaller number (2 or more) of levels in the output image. In the present invention, the term "halftoning" also refers to the commonly used terms "multiple halftoning", or "multitoning", that is halftoning with more than two output levels,

The information embedding and halftoning in box 350 is now described to illustrate the information embedding and the image halftoning. Referring to FIG. 4, a carrier image C(x,y) is provided in box 400. The carrier image C(x,y) is Mx pixels wide and My pixels high. The carrier image 410 has a random distribution of pixel code values such that after its convolution with the message image M(x,y), the message image will not be discernable to the human eyes. In the present invention, the random distribution of pixel code values refers to the lack of regular patterns in the code values across different pixels when the image displayed. In accordance with the present invention, the carrier image can generated using the techniques for generating blue-noise dither matrix that are exemplified in the disclosures in commonly-assigned US-A-4,920,501, US-A-5,111,310, commonly-assigned US-A-5,291,311, commonly-assigned US-A-5,444,551, and commonly-assigned US-A-5,586,203. These disclosures are incorporated herein by reference for generating the carrier message C(x,y) in box 410. The carrier image C(x,y) can also be generated using a uniform or flat Fourier amplitude spectrum and a phase spectrum generated using a random number generator for each phase component. The random phases randomly distribute the message image so that the message invisible and unreadable to human eyes. As it is known in the art, the visible noise can be minimized based on a human visual system modulation transfer function.

Ideally, the carrier image C(x,y) 410 is dominated by "blue noise", that is, short-range (that is, small number of pixels) code value (that is density) fluctuations. The long-range code value (or density) fluctuations produce more visible noise to the eyes and should thus be minimized. The random distribution of code values (or density) is also referred as noise. Another way to understand "blue-noise" is to look at the Fourier transformation of the code values (or densities) as a function of the pixel coordinates in two dimensions. The "blue-noise" refers to the components at pixel high frequencies, as shown in Figure 8.3 on pg. 238 in *Digital Halftoning*, cited above. The generation of the blue-noise carrier image can use the same techniques as disclosed in commonly-assigned US-A-4,920,501, US-A-5,111,310, commonly-assigned US-A-5,291,311, the disclosures of which are incorporated herein.

The carrier image C(x,y) can also include techniques for generating ordered-dither matrix such as distributed dots or center clustered dots. The ordered dither is described in *Digital Halftoning*, MIT Press, Cambridge, Mass., p77-79, 127, by Ulichney, which is also incorporated herein by reference.

A message image M(x,y) is next produced in box 410 using the user input information 340. The message image M(x,y), for example, can include alphanumeric or graphic information associated with the input digital image (scanned from the photographic film and/or input from the user 60). The message in the message image M(x,y) is visible and understandable by viewers. The message image M(x,y) is of the same size as the carrier image C(x,y) (that is Mx x My pixels).

The carrier image C(x,y) and the message image M(x,y) are then convoluted in box 420 to form a scrambled signal S(x,y) (that is of the same size as M(x,y) and C(x,y)):

$$S(x,y) = M(x,y) * C(x,y). \tag{1}$$

In Eqn. (1), the symbol "*" denotes the mathematical operation of convolution. In particular, a circular convolution can be efficiently performed in either space domain (image domain) or Fourier frequency domain representations for the present invention (see "Digital Signal Processing" by Alan V. Oppenheim and Ronald W. Schafer, Prentice-Hall, Inc., 1975, pgs. 101-115).

The message image M(x,y) 400, the carrier image C(x,y) 410 and the scrambled signal S(x,y) are preferably smaller than the processed digital image I(x,y) such that a plurality of message images can be embedded into the processed digital image I(x,y). For example, Mx x My can be 64 x 64, 128 x 128, and 256 x 256, all in the unit of pixels. The N-bit processed digital image or the M-bit halftoned digital image I'(x,y), for example, can have 3000 pixels and 2000 pixels. The selection of Mx and My can also be dependent on the printing property (such as the format size of the printed image 180). The redundancy in the embedded information in the M-bit halftoned image I'(x,y) increases the signal-to-noise ratio in the extraction of embedded information from the printed image 180. In case a part of the printed image 180 is damaged of torn off, the redundancy of the scrambled signals also ensures the embedded information can be extracted from just a small portion of the printed image 180.

The scrambled signal S(x,y) is next scaled by a scale factor α in box 430 to produce a dither matrix DM(x,y) that is used for halftoning in box 440.

$$DM(x,y) = \alpha S(x,y) + \beta \tag{2}$$

where β is an offset constant. This is done at each pixel location (x,y) of the scrambled signal S(x,y. The scaling factor α controls the degree of the modulation (or dithering) in the M-bit halftoned digital image I'(x,y). The scaling factor α is optimized to minimize the visual noise while producing the visual gray scale effects of I(x,y). The scaled scrambled image αS(x,y) has a bit depth of L-bit. L-bit is typically 1 — 2 bits per pixel, and can sometimes be 4 bits per pixel. The bit depth of the L-bit scaled scrambled image αS(x,y) is considerably lower than the bit depth of the N-bit processed digital image I(x,y), such that the noise added for halftoning and information embedding in the box 350 is small compared to the dynamic range of the N-bit processed digital image I(x,y). The scaling factor α is sometimes intentionally chosen to be large so that the dithering amplitude is beyond the spacing of the two nearest tone levels in the M-bit digital image. This is referred to as over-modulation in the field of halftoning.

The offset constant β is used to adjust the mean code value at all the pixels in DM(x,y). For example, β can be chosen such that the pixel elements in DM(x,y) can have both positive and negative code values to produce a zero mean value. In this way, the mean density is not shifted from N-bit I(x,y) to M-bit I'(x,y) by the halftoning process and information embedding process in box 350.

The M-bit halftoned digital image I'(x,y) can have two (halftone) or more (multitone) density levels at each pixel. The number of density levels in the M-bit halftoned digital image I'(x,y) is determined by the capability of the digital printer 50 or the display device 55.

The L-bit dithered matrix DM(x',y') is next added to the input processed digital image I(x,y) in box 470. Since the dimensions of DM(x',y') is usually a small fraction of the size of I(x,y), a plurality of DM(x',y') are tiled together in a periodic fashion before the addition. In this arrangement, the x and y pixel coordinates in I(x,y) are respectively processed by the modulo operators 450 and 460. The modulo operators are based on divisors of Mx and My respectively. The modulus values x' and y' are then used to locate the address in the dither matrix DM(x',y'), which is added to the N-bit code value of I(x,y) at the coordinate (x,y) in box 470 to produce an N-bit digital image E(x,y) with the embedded information.

The N-bit digital image E(x,y) with the embedded information is next quantized (that is thresholded) in box 480 to produce a halftoned M-bit digital image I'(x,y) having the embedded information, as discussed on pg. 239 in *Digital Halftoning,* cited above. An equivalent comparator function (US-A-5,111,310 to Parker) can also be used in the place of the quanitization (or thresholding) function, which is incorporated herein by reference.

The M-bit halftoned digital image I'(x,y) having the embedded information can next be sent by the computer 20 to digital printer 50 wherein a printed image 180 can be produced, or to display device 55 wherein the image is displayed. The printed and displayed image are halftoned and carry the embedded information.

The information in the printed image 180 and the displayed image can be digitized by scanning optical density values at discrete pixel locations to produce a scanned digital image I"(x,y). The embedded information can be extracted from I"(x,y), or directly from I'(x,y).

The scanned image I"(x,y) is cross correlated with a replica of the carrier image $C(x, y)$ to produce an extracted message image M'(x,y), as described by the following:

$$M'(x,y) = I''(x,y) \otimes C(x,y) \approx M(x,y) \qquad (3)$$

where $\otimes$ denotes the operation of a circular cross correlation.

The extracted information as described above can be displayed or printed for verifying the authenticity, the copy right of the printed or displayed image. The embedded information may include other image information or sound information associated with the image. The sound information can be played using sound translation programs.

An advantage of the present invention is that the signal-to-noise ratio (that is the reliability) in the extraction of the embedded information is improved. This is because that only one noise source is added in the halftoning and information embedding. In contrast, the prior art require separate noises to be added to the input digital image. The noise level is therefore higher in the prior techniques. In addition, since the halftoning and the information embedding are co-optimized in the present invention, the noise in the halftoned image with the embedded information is minimized, the image quality is also maximized.

Subject matter in FIG. 3 can be embodied in a computer program provided on a computer-readable storage medium. The computer storage medium may comprise, for example, magnetic storage media such as magnetic disk (floppy disk), magnetic tape, optical storage media such as an optical disk, optical tape, machine-readable bar code, solid-state electronic storage devices such as random-access memories or read-only memories, or any other physical devices or medium which can be employed to store computer programs.

Other features of the invention are included below.

The method wherein the convoluting step further including multiplying the code values at each pixel location of the dithering matrix by a scaling factor and then adding an offset constant.

A method for operating on an N-bit input digital image to produce a M-bit halftoned digital image having embedding information, comprising

 a) forming a digital message image having pixels values representing the information to be embedded;
 b) providing a digital carrier image which has a random distribution of pixel code values;
 c) convoluting the digital message image and the digital carrier image to produce a dithering matrix which contain the information to be embedded; and
 d) halftoning the N-bit input digital image with the dithering matrix to produce the M-bit halftoned digital image having the embedded information wherein M is less than N.

The method wherein M is equal to 1.

The method wherein M is an integer greater than 1.

The method wherein the random distribution of pixel code values of the carrier digital image is characterized by blue-noise.

The method further including the step of sending the halftoned M-bit digital image to an output device for producing a visible image with invisible embedded information.

The method wherein the output device is a printer which produces a halftoned image on a receiver or a display which produces a halftoned image.

The method further including the step of extracting the message from the printed or the displayed image on the receiver or the display, respectively.

The method wherein the extracting step includes digitizing the halftoned image on the receiver, and convoluting the digitized image from the receiver with the digital carrier image.

The method wherein the convoluting step further including multiplying the code values at each pixel location of the dithering matrix by a scaling factor and then adding an offset constant.

Apparatus for controlling a printer to produce a visible image on a receiver which includes invisible embedded information, comprising

a) means for receiving an M-bit halftoned digital image having embedded information wherein the digital image was quantized from an N-bit input digital image wherein N is greater than M and the embedded information was included in a dithered matrix produced by the convolution of a message image having the embedded information and a carrier image having a random distribution of pixel code values; and

b) means for producing signals in response to the M-bit halftoned digital image to control the printer to produce the visible image on the receiver corresponding to the N-bit input digital image wherein the embedded information is invisible and can subsequently be extracted.

**PARTS LIST**

| | |
|---|---|
| 10 | apparatus |
| 20 | computer |
| 25 | film property extraction device |
| 30 | film processor |
| 31 | CPU |
| 32 | input device |
| 33 | monitor |
| 34 | memory |
| 35 | image processor |
| 40 | film writer |
| 50 | digital printer |
| 55 | display device |
| 60 | user |
| 70 | camera |
| 80 | exposed film cassette |
| 90 | developed film cassette |
| 100 | developed film cassette |
| 110 | digital camera |
| 120 | compact disk |
| 130 | CD drive |
| 140 | remote location |
| 150 | information channel |
| 180 | printed image |
| 200 | CD writer |
| 210 | optical CD |
| 300 | scanning the developed film |
| 310 | extracting film property |
| 320 | film property |
| 330 | adjusting embedding parameters |
| 340 | user input |
| 343 | printing property |
| 345 | image processing |
| 350 | embedding information/halftoning |
| 400 | carrier image |
| 410 | message image |
| 420 | convolution |
| 430 | scale amplitude |
| 440 | dither matrix |
| 450 | Mod Mx |
| 460 | Mod My |
| 470 | add |
| 480 | quantization |

**Claims**

1. A method for embedding information in an input digital image, comprising

a) forming a digital message image having pixels values representing the information to be embedded;

b) providing a digital carrier image which has a random distribution of pixel code values;

c) convoluting the digital message image and the digital carrier image to produce a dithering matrix which contain the information to be embedded; and

d) halftoning the input digital image with the dithering matrix to produce a halftoned digital image having the embedded information.

2. The method of claim 1 wherein the random distribution of pixel code values of the carrier digital image is characterized by blue-noise.

3. The method of claim 1 further including the step of sending the halftoned digital image to an output device for producing a visible image with invisible embedded information.

4. The method of claim 3 wherein the output device is a printer which produces a halftoned image on a receiver or a display which produces a halftoned image.

5. The method of claim 4 further including the step of extracting the message from the printed or the displayed image on the receiver or the display, respectively.

6. The method of claim 5 wherein the extracting step includes digitizing the halftoned image on the receiver, and convoluting the digitized image from the receiver with the digital carrier image.

7. The method of wherein the halftoning step includes

   a) adding the dithering matrix to the N-bit input digital image to provide the N-bit digital image with the embedded information; and
   b) quantizing the N-bit digital image with the embedded information to produce a halftoned M-bit digital image having the embedded information so that M is less than N.

8. The method of claim 8 wherein the random distribution of pixel code values of the carrier digital image is characterized by blue-noise.

9. A method for operating on an N-bit input digital image to produce a halftoned digital image having embedding information, comprising

   a) forming a digital message image having pixels values representing the information to be embedded;
   b) providing a digital carrier image which has a random distribution of pixel code values;
   c) convoluting the digital message image and the digital carrier image to produce a dithering matrix which contain the information to be embedded;
   d) adding the dithering matrix to the N-bit input digital image to provide the N-bit digital image with the embedded information; and
   e) quantizing the N-bit digital image with the embedded information to produce a halftoned M-bit digital image having the embedded information so that M is less than N.

10. A computer program product, comprising: a computer readable storage medium having a computer program stored thereon for operating on an N-bit input digital image to produce a halftoned digital image having embedding information, comprising the steps of

   a) forming a digital message image having pixels values representing the information to be embedded;
   b) providing a digital carrier image which has a random distribution of pixel code values;
   c) convoluting the digital message image and the digital carrier image to produce a dithering matrix which contain the information to be embedded;
   d) adding the dithering matrix to the N-bit input digital image to provide the N-bit digital image with the embedded information; and
e) quantizing the N-bit digital image with the embedded information to produce a halftoned M-bit digital image having the embedded information so that M is less than N.

FIG. 1

EP 1 094 660 A2

FIG. 2

EP 1 094 660 A2

FIG. 3

FROM 60

USER INPUT INFORMATION

EMBEDDING INFORMATION / HALFTONING — 350

I(X,Y)

I(X,Y)

X,Y

ADJUSTING EMBEDDING PARAMETERS — 330

FILM PROPERTY — 320

I(X,Y)

FROM 60

PRINTING PROPERTY — 343

IMAGE PROCESSING — 345

EXTRACTING FILM PROPERTY — 310

SCANNING THE DEVELOPED FILM — 300

DEVELOPED FILM — 90

*FIG. 4*

EP 1 094 660 A2